# EUROPÄISCHE PATENTSCHRIFT

(11) **EP 3 446 897 B1**
(45) Veröffentlichungstag und Bekanntmachung des Hinweises auf die Patenterteilung: **29.04.2020**
(21) Anmeldenummer: 18187886.9
(22) Anmeldetag: 08.08.2018
(51) Int. Cl.: B60G 5/047, B60G 5/053, B60G 5/06, B22D 19/02, B62D 21/02

(54) **TRAGBOCK FÜR EIN LENKERGEFÜHRTES DOPPELACHSAGGREGAT**
HANGER BRACKET FOR A TWIN AXLE UNIT GUIDED BY A SUSPENSION ARM
CHAPE DES SUSPENSION POUR UN ENSEMBLE À DOUBLE ESSIEU GUIDÉ PAR UN BRAS DE SUSPENSION

(30) Priorität: 23.08.2017 DE 102017119257
(43) Veröffentlichungstag der Anmeldung: 27.02.2019
(73) Patentinhaber: MAN Truck & Bus SE, 80995 München (DE)
(72) Erfinder: Sabathil, Andreas, 81373 München (DE); Gök, Mustafa, 80809 München (DE); Rübsamen, Susanne, 80687 München (DE)
(74) Vertreter: v. Bezold & Partner Patentanwälte - PartG mbB

(56) Entgegenhaltungen:
- WO-A2-2014/041409
- DE-A1- 19 746 167
- DE-A1-102005 028 309
- DE-A1-102015 207 815
- DE-A1-102016 007 188
- DE-U1- 20 319 147

## Beschreibung

Die Erfindung betrifft einen Tragbock für ein lenkergeführtes Doppelachsaggregat eines Nutzfahrzeugs. Die Erfindung betrifft ferner ein lenkergeführtes Doppelachsaggregat und ein Nutzfahrzeug mit einem solchen Tragbock.

Üblicherweise wird bei Nutzfahrzeugen mit einem Doppelachsaggregat unterhalb eines Rahmenlängsträgers ein Tragbock mit einem gegossenen Tragzapfen anmontiert, wobei der Tragzapfen die Abstützung beider Achsen des Doppelachsaggregates verbindenden und abfedernden Blattfederpakets über den Tragbock gegen den Fahrzeugrahmen realisiert.

Bekannt ist eine mögliche Ausführung eines solchen lenkergeführten Doppelachsaggregates aus der DE 10 2005 028 309 A1 oder der EP 069 7297 A2. Das hierin jeweils offenbarte lenkergeführte Doppelachsaggregat für Nutzfahrzeuge umfasst an Lenkern geführte Achsen und in Pendelfederlagern aufgehängte Blattfedern, die sich gegen die Achslager und den Fahrzeugrahmen abstützen.

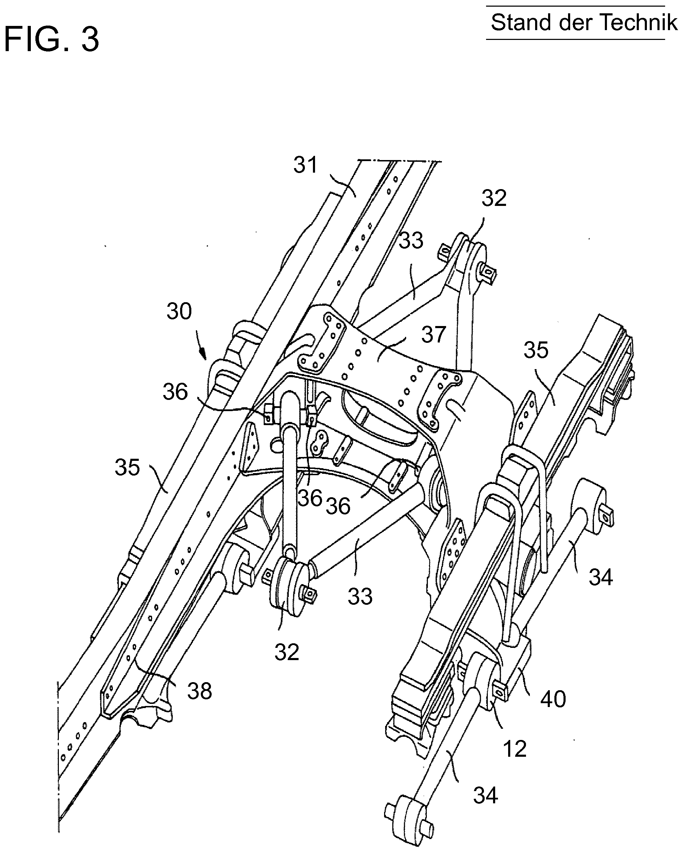

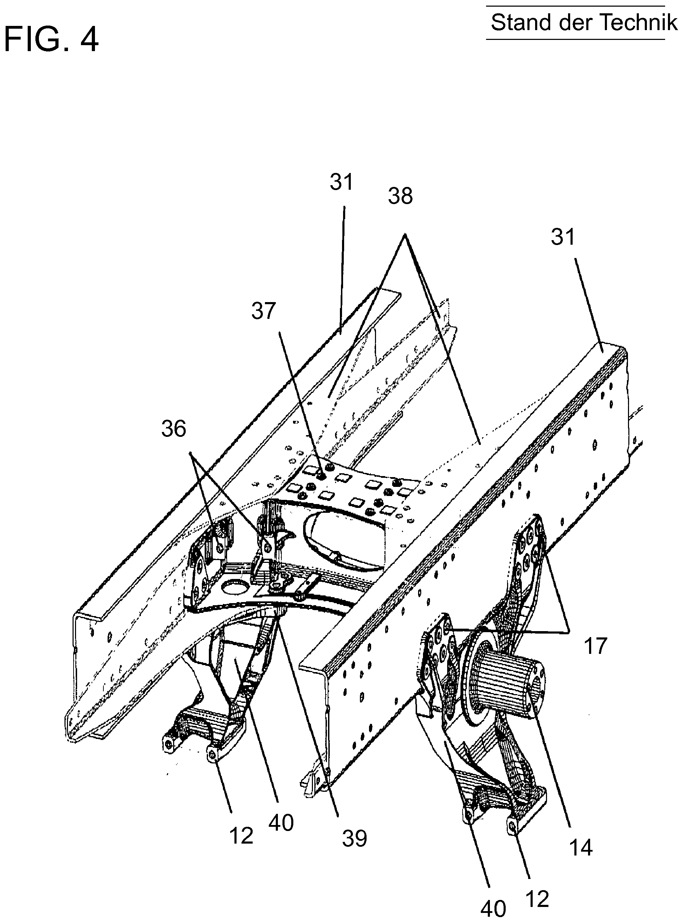

Die Figuren 3 und 4 illustrieren dabei beispielhaft ein an sich bekanntes Doppelachsaggregat mit den Tragböcken. In Figur 3 ist ein lenkergeführtes Doppelachsaggregat 30 in einer perspektivischen Darstellung dargestellt, in der Rahmenlängsträger 31 ausschnittsweise dargestellt sind. Die Rahmenlängsträger 31 verlaufen in bekannter Weise in Längsrichtung des Nutzfahrzeugs, wobei zwischen den Rahmenlängsträgern 31 ein Querträger 37 angeordnet ist. Das Doppelachsaggregat 30 weist zwei Achsen (nicht dargestellt) auf, welche auf der oberen Seite über die Achszentralgelenke 32 mit Dreieckslenkern 33 und auf der unteren Seite über Längslenker 34 geführt sind. Durch diese Lenkeranordnung ist die Achse sowohl seitlich als auch in der Längsrichtung geführt und kann in vertikaler Richtung eine Bewegung ausführen, wobei an jeder Fahrzeugseite ein Paket an Blattfedern 35 beide Achsen in vertikaler Richtung federn. Die Befestigung der Blattfedern 35 an den an jeder Fahrzeugseite angeordneten Tragböcken 40 erfolgt über Federtragzapfen 14, über die in einer Lageranordnung die Blattfedern 35 mittig befestigt sind, so dass im Fahrbetrieb des Nutzfahrzeugs Bodenunebenheiten lastunabhängig ausgleichbar sind.

Die Dreiecklenker 33 sind an ihrer dem Achszentralgelenk 32 gegenüberliegenden Seite in den an die Rahmenlängsträger 31 angrenzenden Befestigungsstellen 36 des Querträgers 37 befestigt, so dass die Tragböcke 40 zur Führung der Achsen die Längslenker 34 über Längslenkerverbindungsstellen 12 aufnehmen. Die Tragböcke 40 sind fest mit den Rahmenlängsträgern 31 und dem Querträger 37 des Nutzfahrzeugs verbunden, so dass im Fahrbetrieb die Dreiecklenker 33 und die Längslenker 34 eine Pendelbewegung um die Befestigungsstelle 36 und die Längslenkerverbindungsstellen 12 ausüben, wobei die Pendelbewegung der Doppelachse bedingt durch die Kinematik der Lenkeranordnung über die im Paket angeordneten Blattfedern 35 ermöglicht wird.

Die seitens der Achsen in die Dreiecklenker 33 eingeleiteten Betriebskräfte werden über den Querträger 37 abgeleitet, wobei die Tragböcke 40 neben der Grundbelastung durch die über die Federtragzapfen 14 eingeleiteten Hauptfederkräfte des Fahrbetriebs lediglich die über die Längslenker 34 eingeleiteten Kräfte aufnehmen.

Figur 4 zeigt eine perspektivische Ansicht der zweifach vorhandenen Rahmenlängsträger 31, der Querträger 37, der Verstärkungselemente 38 und der an den Rahmenlängsträgern 31 über Befestigungsflansche 17 verbundenen Tragböcke 40 des lenkergeführten Doppelachsaggregates. Die Befestigungsflansche 17 weisen Durchgänge auf, welche eine Verschraubung bzw. Vernietung der Tragböcke 40 mit den Rahmenlängsträgern 31 und den Verstärkungselementen 38 über die Befestigungsflansche 17 ermöglichen. Die Tragböcke 40 sind mit den Verstärkungselementen 11 und mit der Unterseite des Querträgers 37 über Verbindungsflansche 39 verbunden.

Die aus dem Stand der Technik bekannten Tragböcke von Doppelachsaggregaten sind als konventionelle Gussbauteile aus einem Werkstoff gegossen. Insbesondere Gussbauteile weisen eine hohe Funktionsintegration auf. Dabei werden unter anderem strukturmechanisch beanspruchte Bereiche sowie Schnittstellen durch Gießen aus nur einem Werkstoff urgeformt. Die Konstruktion des Bauteils ist aus diesem Grund häufig ein Kompromiss unterschiedlichster Anforderungen mit den Eigenschaften eines Werkstoffs.

Das Dokument DE 10 2016 007 188 A1 offenbart eine Aufhängevorrichtung zur Anbindung von Achskomponenten einer Tandemachse an eine Rahmenstruktur eines Kraftfahrzeugs, insbesondere eines Nutzfahrzeugs, wobei die Aufhängevorrichtung mindestens einen Mittellagerbock mit einem Lagerzapfen zur Aufnahme von Achslasten der Tandemachse sowie einer Lenkeraufnahme zur Befestigung von Längslenkern der Tandemachse aufweist. Das Dokument DE 197 46 167 A1 offenbart ein Leichtmetallbauteil, das als ein Gussteil aus einem Leichtmetall und/oder einer Leichtmetalllegierung hergestellt ist, wobei es mindestens ein Anbauelement in Form eines Einlegeteils zum Einlegen in die Gießform des Gussteiles umfasst, das nach dem Gießen zu mindestens bereichsweise von dem Leichtmetall und/oder der Leichtmetalllegierung umschossen ist.

Es ist eine Aufgabe der Erfindung, diesen Stand der Technik weiterzubilden, um Nachteile herkömmlicher Doppelachsaggregate und/oder Tragböcke zu vermeiden. Es ist insbesondere eine Aufgabe der Erfindung, einen Tragbock eines Doppelachsaggregats bereitzustellen, der Kosten- und Gewichtsvorteile zu bekannten Tragböcken aufweist.

Diese Aufgaben werden durch Vorrichtungen mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird ein Tragbock für ein lenkergeführtes Doppelachsaggregat eines Nutzfahrzeugs bereitgestellt. Üblicherweise wird bei Nutzfahrzeugen mit einem Doppelachsaggregat unterhalb eines Rahmenlängsträgers ein Tragbock mit einem Tragzapfen anmontiert, wobei der Tragzapfen die Abstützung eines die beiden Achsen des Doppelachsaggregates verbindenden und abfedernden Blattfederorganes über den Tragbock gegen den Fahrzeugrahmen realisiert. Bei diesen Tragböcken handelt es sich um vorzugsweise kräftig dimensionierte Gussteile, die u. a. die Kräfte, die aus dem Federlager resultieren, über Tragzapfen des Doppelachsaggregats aufnehmen müssen.

Der Tragbock weist in an sich bekannter Weise einen Grundkörper, einen Federtragzapfen zur Lagerung einer Blattfeder des Doppelachsaggregats, eine Längslenkerverbindungsstelle zur Anbindung eines Längslenkers und eine Rahmenlängsträgerverbindungsstelle zur Befestigung des Tragbocks an einem Rahmenlängsträger des Nutzfahrzeugs auf.

Der Grundkörper kann im Querschnitt im Wesentlichen dreiecksförmig ausgeführt sein, mit einer stumpfen Spitze im Bereich der Längslenkerverbindungsstelle. Der Federtragzapfen ist vorzugsweise in einem mittleren Bereich des Grundkörpers vorgesehen, insbesondere dort angegossen. Die Längslenkerverbindungsstelle und die Rahmenlängsträgerverbindungsstelle sind an gegenüberliegenden Endbereichen des Grundkörpers angeordnet bzw. angegossen.

Erfindungsgemäß ist der Tragbock als Verbundgussteil, insbesondere als metallisches Verbundgussteil, ausgeführt. Auf diese Weise können Kosten- und Massenvorteile im Vergleich zu konventionellen Gusstragböcken aus nur einem Werkstoff erzielt werden.

Hierbei kann der Tragbock mindestens einen aus einem ersten Werkstoff gefertigten, insbesondere gegossenen oder mittels 3D-Druck gefertigten, ersten Abschnitt und mindestens einen aus einem zweiten Werkstoff gegossenen zweiten Abschnitt aufweisen, wobei der erste Werkstoff im Vergleich zu dem zweiten Werkstoff eine höhere Schwingfestigkeit und/oder Dichte aufweist. Die Schwingfestigkeit (engl. fatigue behaviour) gibt ein Maß (z. B. über die Schwingspielzahl) für das Verformungs- und Versagensverhalten von Werkstoffen bei zyklischer Beanspruchung an und kann experimentell bestimmt werden. Je höher die Schwingfestigkeit, desto besser die mechanische Leistungsfähigkeit und das Verformungs- und Versagensverhalten des Werkstoffes.

Gemäß einer besonders bevorzugten Ausführungsform bildet der mindestens eine erste Abschnitt einen Hauptlastpfad des Tragbocks und der mindestens eine zweite Abschnitt einen Nebenlastpfad des Tragbocks aus.

Ferner kann ein Bereich des Tragbocks, der im Einsatz des Tragbocks einer hohen Beanspruchung ausgesetzt ist, als ein erster Abschnitt ausgeführt sein und ein Bereich des Tragbocks, der im Einsatz des Tragbocks einer im Vergleich hierzu geringeren mechanischen Beanspruchung ausgesetzt ist, als ein zweiter Abschnitt ausgeführt sein.

Der erfindungsgemäße Tragbock kann somit auf Basis eines hybriden Gussprozesses hergestellt werden, bei dem unterschiedliche Materialien (z. B. Eisen-, Stahl-, Aluminiumguss) in einem Bauteil kombiniert werden. Dadurch können die werkstoffspezifischen Eigenschaften gezielt eingesetzt werden, was Kosten- und Masseneinsparungspotentiale ermöglicht und die Funktion des Bauteils nicht beeinträchtigt. Hierbei ist ein anforderungs- und herstellungsgerechtes Design des Bauteils besonders vorteilhaft zur Erzielung der damit verbundenen Vorteile. Eine Untergliederung des mechanisch aktiven Volumens in mechanisch hoch beanspruchte Bereiche (Hauptlastpfade) und geringfügig beanspruchte Bereiche (Nebenlastpfade) ermöglicht eine massen- und kostenoptimierte Verwendung von Werkstoffen. Es können Bereiche hoher mechanischer Beanspruchung mit hochfesten Werkstoffen gefertigt, z. B. gegossen oder 3D-gedruckt, sein und geringfügig beanspruchte Bereiche mit Werkstoffen reduzierter mechanischer Leistungsfähigkeit bzw. Dichte gegossen sein.

Im Rahmen der Erfindung wurde dabei festgestellt, dass folgende Bereiche als Bereiche hoher mechanischer Beanspruchung anzusehen sind und daher vorzugsweise als erste Abschnitte (Bereiche aus dem ersten Werkstoff) gefertigt, gegossen oder 3D-gedruckt werden können:
Der mindestens eine erste Abschnitt kann die beiden äußeren Begrenzungsflächen des Grundkörpers umfassen, die sich jeweils zwischen der Längslenkerverbindungsstelle und einem äußeren Endbereich der Rahmenlängsträgerverbindungsstelle erstrecken.

Der mindestens eine erste Abschnitt kann ferner einen innerhalb des Grundkörpers verlaufenden Bereich umfassen, der sich vorzugsweise geradlinig zwischen der Längslenkerverbindungsstelle und dem Federtragzapfen erstreckt und sich beispielsweise hierbei an einem Lastpfad orientiert. Dieser Bereich ist beidseitig von zweiten Abschnitten, d. h. Bereichen aus dem zweiten Werkstoff, umgeben. Die zweiten Abschnitte können außenseitig wiederum von den äußeren Begrenzungsflächen aus dem ersten Werkstoff begrenzt werden, wie vorstehend beschrieben wurde.

Der mindestens eine erste Abschnitt kann ferner mehrere Verbindungsbereiche umfassen, die sich in Querschnittsansicht des Grundkörpers ausgehend von einem Anbindungsbereich des Federtragzapfens kastenförmig, strahlenartig, fächerartig und/oder radial hin zu der Rahmenlängsträgerverbindungsstelle erstrecken. Hierbei kann der mindestens eine zweite Abschnitt Bereiche umfassen, die zwischen zwei benachbarten Verbindungsbereichen angeordnet sind. Gemäß dieser Variante enthält der Grundkörper oberhalb des Anbindungsbereichs des Federtragzapfens somit mehrere Streben aus dem ersten Werkstoff.

Der mindestens eine erste Abschnitt kann ferner einen an die Rahmenlängsträgerverbindungstelle angrenzenden Endbereich des Grundkörpers umfassen. Dieser Abschnitt aus dem ersten Werkstoff kann sich vorzugsweise entlang des gesamten Endbereichs des Grundkörpers, an dem die Rahmenlängsträgerverbindungsstelle angegossen ist, erstrecken. Der obere Endbereich des Grundkörpers kann somit einen horizontalen Endabschnitt aus dem ersten Werkstoff aufweisen, an dem die Rahmenlängsträgerverbindungsstelle angegossen ist.

Der zweite Werkstoff kann aus einem Leichtmetalguss, wie z. B. ein Aluminiumguss oder Magnesiumguss hergestellt sein. Der erste Werkstoff kann Stahl (insbesondere Stahl im Weitesten Sinne) oder Grauguss sein.

Die Rahmenlängsträgerverbindungsstelle, der Tragzapfen und/oder die Längslenkerverbindungsstelle können vorzugsweise aus dem zweiten Werkstoff gefertigt sein. Besonders vorteilhaft ist eine Ausführung der zweiten Abschnitte aus Aluminium oder einer Aluminiumlegierung sowie anderweitigen Werkstoffen, die im modernen Leichtbau Anwendung finden wie z. B. Magnesiumguss. Ferner kann ein Verschraubungsbereich der Rahmenlängsträgerverbindungsstelle derart gefertigt sein, dass anstatt einer Vollausführung aus Aluminium eine Skelettartige Ausführung vorgesehen ist, umfassend eine skelettartige oder gerüstartige Tragstruktur, beispielsweise aus dem ersten Werkstoff, die von dem zweiten Werkstoff, z. B. Aluminium oder einer Aluminiumlegierung, ummantelt ist.

Ferner ist es besonders vorteilhaft, wenn eine Verbindung zwischen einem ersten Abschnitt und einem zweiten Abschnitt durch einen Formschluss im Übergangsbereich zwischen dem ersten und dem zweiten Abschnitt hergestellt ist. Mittels eines Formschlusses kann ein wesentlich besserer Zusammenhalt der Bauteilwerkstoffe erzielt werden.

Der Formschluss kann beispielsweise durch eine Lochstruktur, ein Lochbild und/oder einen Hinterschnitt, z. B. durch eine U- oder I-Struktur, gebildet sein, die beim Gussprozess am Übergangsbereich vorgesehen werden, so dass sich beim zeitversetzten Gießen des ersten und zweiten Werkstoffes entsprechend ein Formschluss ausbildet.

Eine weitere Möglichkeit der erfindungsgemäßen Realisierung sieht vor, dass eine Verbindung zwischen einem ersten Abschnitt und einem zweiten Abschnitt durch einen durch Aufschrumpfen hergestellten Kraftschluss realisiert ist. Hierbei kühlt beim Umgießen eines zuerst gegossenen Werkstoffes der nachträglich gegossene, heiße Werkstoff ab und schrumpft dabei. Auf diese Weise wird beim Schrumpfen ein Kraftschluss mit dem anderen bereits gegossenen Werkstoff ausgebildet.

Um die Festigkeit, insbesondere im Bereich der Hauptlastpfade bzw. der ersten Abschnitte, zu erhöhen, können eine oder mehrere Versteifungselemente vorgesehen sein. Diese können beispielsweise als Rippen-, Mäander- und/oder Kastenprofil ausgeführt sein, das an zumindest einem der ersten Abschnitte angeordnet ist.

Besonders vorteilhaft ist es, ein Versteifungselement vorzusehen, das sich zwischen dem Federtragzapfen und der Rahmenlängsträgerverbindungsstelle erstreckt, da hier eine besonders große Beanspruchung des Tragbocks auftritt.

Die Längslenkerverbindungsstelle und Rahmenlängsträgerverbindungsstelle können in an sich bekannter Weise betreffend ihre Formgebung ausgestaltet sein. Die Erfindung ist hierbei nicht auf eine bestimmte Schnittstellenform beschränkt. Die Rahmenlängsträgerverbindungsstelle kann beispielsweise zwei seitlich angegossene Befestigungsflansche aufweisen. Diese können voneinander beabstandet in den Außenbereichen des Tragbocks angeordnet sein. Die Rahmenlängsträgerverbindungsstelle kann auch einen sich über die gesamte Länge des Grundkörpers bzw. Tragbocks erstreckenden Befestigungsflansch umfassen.

Die Erfindung betrifft ferner ein lenkergeführtes Doppelachsaggregat für ein Nutzfahrzeug, welches an zwei Rahmenlängsträgern des Nutzfahrzeugs angeordnet ist und zumindest an Längslenkern und an Dreiecklenkern geführte Achsen aufweist, wobei die vertikale Abstützung der Achsen über Blattfedern erfolgt, welche mit an Tragböcken angegossenen Federtragzapfen verbunden sind. Die Tragböcke sind hierbei wie in diesem Dokument beschrieben ausgeführt.

Die Erfindung betrifft ferner ein Nutzfahrzeug, insbesondere einen Lastkraftwagen, aufweisend einen Tragbock wie in diesem Dokument beschrieben und/oder ein Doppelachsaggregat wie in diesem Dokument beschrieben.

Die zuvor beschriebenen bevorzugten Ausführungsformen und Merkmale der Erfindung sind beliebig miteinander kombinierbar. Verfahrensgemäß offenbarte Aspekte sollen auch als vorrichtungsgemäß offenbart gelten und umgekehrt. Weitere Einzelheiten und Vorteile der Erfindung werden im Folgenden unter Bezug auf die beigefügten Zeichnungen beschrieben. Es zeigen:
- Figur 1: eine perspektivische Ansicht eines Tragbocks gemäß einem Ausführungsbeispiel;
- Figur 2: eine stark schematisierte Querschnittsansicht des Tragbocks und Illustration der möglichen, aus einem ersten Werkstoff gegossenen Bereiche gemäß einem Aus-führungsbeispiel der Erfindung;
- Figur 3: eine perspektivische Ansicht eines lenkergeführten Doppelachsaggregats;
- Figur 4: eine perspektivische Ansicht zweier Tragböcke des Doppelachsaggregats, die jeweils an einem Rahmenlängsträger befestigt sind.

Gleiche oder funktional äquivalente Elemente sind in allen Figuren mit denselben Bezugszeichen bezeichnet und werden zum Teil nicht gesondert beschrieben.

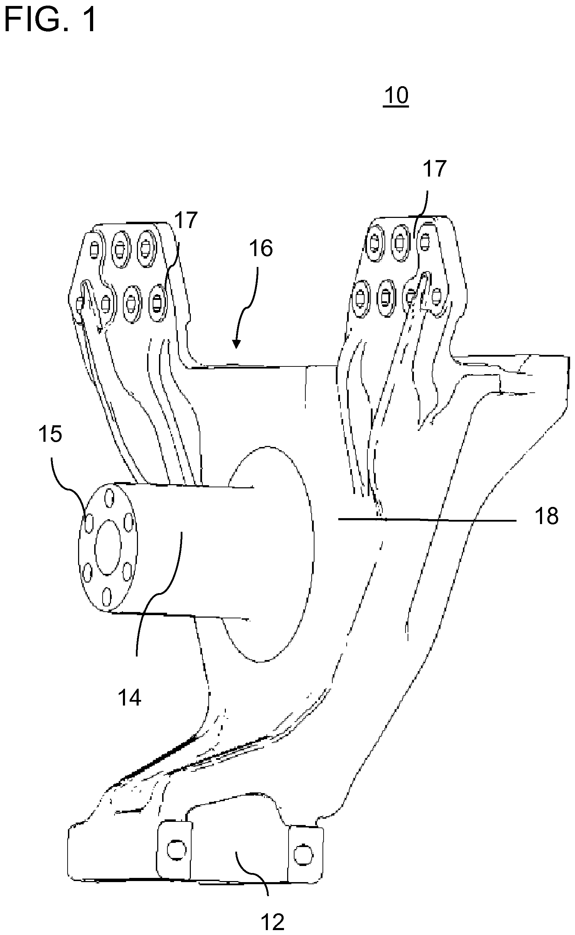

Figur 1 zeigt eine perspektivische Ansicht eines Tragbocks gemäß einem Ausführungsbeispiel. Der Tragbock 10 dient als Tragbock für ein lenkergeführtes Doppelachsaggregat eines Lastkraftwagens, wie es beispielhaft in Figur 3 illustriert ist.

Der in Figur 1 dargestellte Tragbock 10 besteht in an sich bekannter Weise aus einem Grundkörper 18, der das mechanisch aktive Volumen bildet, und aus Schnittstellenbereichen. Letztere umfassen einen Federtragzapfen 14 zur Lagerung einer Blattfeder des Doppelachsaggregats, eine Längslenkerverbindungsstelle 12 zur Anbindung eines Längslenkers und eine Rahmenlängsträgerverbindungsstelle 16 zur Befestigung des Tragbocks an einem Rahmenlängsträger des Nutzfahrzeugs.

An der Längslenkerverbindungsstelle 12 nimmt der Tragbock 10 zur Führung der Achsen eines Doppelachsaggregats (jeweils nicht dargestellt) lediglich die Längslenker (nicht dargestellt) auf. Endseitig befinden sich am Federtragzapfen 14 Montagebohrungen 15, um die Aufnahme und axiale Sicherung des Federpaketes über eine Verschraubung zu ermöglichen, wobei im vorliegenden Ausführungsbeispiel sechs Montagebohrungen 15 vorgesehen sind. Die Rahmenlängsträgerverbindungsstelle 16 weist zwei seitlich angegossene Befestigungsflansche 17 auf, die voneinander beabstandet in den Außenbereichen des Tragbocks 10 angeordnet sind. Die Befestigungsflansche 17 weisen Durchgänge auf, welche eine Verschraubung bzw. Vernietung des Tragbocks 10 mit den Rahmenlängsträgern über die Befestigungsflansche 17 ermöglichen.

Eine Besonderheit des Tragbocks 10 liegt darin, dass dieser als metallisches Verbundgussteil ausgeführt ist. Der Tragbock 10 weist dabei mindestens einen aus einem ersten Werkstoff gefertigten, z. B. gegossenen oder 3D-gedruckten, ersten Abschnitt 20-28 und mindestens einen aus einem zweiten Werkstoff gegossenen zweiten Abschnitt 29, 12, 14, 17 auf. Hierbei weist der erste Werkstoff im Vergleich zu dem zweiten Werkstoff eine höhere Schwingfestigkeit und/oder Dichte auf.

Hierbei sind die ersten Abschnitte, d. h. die Bereiche, die aus dem ersten Werkstoff gefertigt sind, so gewählt, dass diese die Hauptlastpfade 20-28 des Tragbocks 25 bilden. Diese wurden vorliegend durch Modellberechnungen ermittelt. Die restlichen Bereiche sind aus dem zweiten Werkstoff gegossen. Auf diese Weise werden Bereiche des Tragbocks, die im Einsatz des Tragbocks einer hohen Beanspruchung ausgesetzt sind, aus einem ersten Werkstoff mit höherer Schwingfestigkeit gegossen, während Bereiche des Tragbocks, die im Einsatz des Tragbocks einer im Vergleich hierzu geringeren mecha-nischen Beanspruchung ausgesetzt sind, aus einem zweiten Werkstoff gegossen sind, der eine im Vergleich hierzu geringere Schwingfestigkeit aufweist. Hierdurch können Kosten- und Gewichtsvorteile realisiert werden.

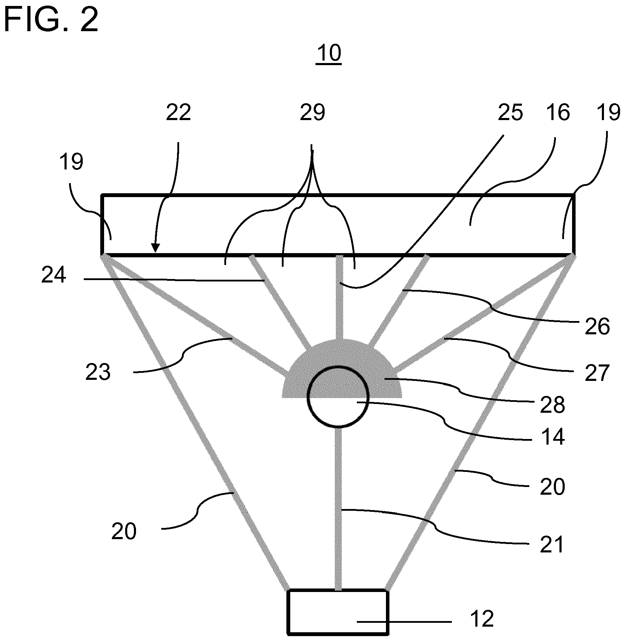

Figur 2 zeigt eine stark schematisierte Querschnittsansicht des Tragbocks 10, die die Hauptlastpfade 20-28 des Tragbocks illustriert, die gleichzeitig diejenigen Abschnitte darstellen, die aus dem ersten Werkstoff, z. B. Stahl, gegossen oder gefertigt sind. Die dazwischenliegenden Bereiche, die in Figur 2 weiß dargestellt sind, sind vorzugsweise aus dem zweiten Werkstoff, z. B. einem Grauguß oder Aluminium, hergestellt. Ferner können die Schnittstellenbereiche 12, 14 und 16 aus dem zweiten Werkstoff, z. B. Aluminium, gegossen sein.

Zu den Bereichen aus dem ersten Werkstoff gehören insbesondere die beiden äußeren Begrenzungsflächen 20 des Grundkörpers 18, die sich jeweils zwischen der Längslenkerverbindungsstelle 12 und einem äußeren Endbereich 19 der Rahmenlängsträgerverbindungsstelle 16 V-förmig erstrecken. Ferner kann ein innerhalb und mittig des Grundkörpers 18 verlaufender Bereich 21 aus dem ersten Werkstoff gegossen sein, der sich geradlinig von der Längslenkerverbindungsstelle 12 bis zum Federtragzapfen 14 erstreckt. Ferner kann ein im Querschnitt halbkreisförmiger Anbindungsbereich 28 im oberen Bereich des Federtragzapfens 14 aus dem ersten Werkstoff gegossen sein. Ferner können mehrere Verbindungsbereiche 23-27, die sich in Querschnittsansicht ausgehend von dem Anbindungsbereich 28 des Federtragzapfens 14 kastenförmig, strahlenartig und fächerartig hin zu der Rahmenlängsträgerverbindungsstelle 16 erstrecken, aus dem ersten Werkstoff gegossen sein. Die dazwischenliegenden Bereiche 29 können aus dem zweiten Werkstoff gegossen sein.

Ferner kann ein an die Rahmenlängsträgerverbindungstelle 16 angrenzender Endbereich 22 des Grundkörpers 18 aus dem ersten Werkstoff gefertigt sein.

Zur Herstellung des als Verbundgussbauteil ausgeführten Tragbockes 10 können aus dem Stand der Technik an sich bekannte Verbundgussverfahren verwendet werden. Hierbei werden z. B. Bereiche höherer mechanischer Leistungsfähigkeit durch Gießen oder 3D-Druck (z. b. mittels 3D-Druck-Laser-Sinter-Verfahren oder 3D-Druck Bogenschweißverfahren) hergestellt. Diese werden in einem nachfolgenden Schritt umgossen mit einem Leichtbauwerkstoff (z. B. Aluminiumguss, Magnesiumguss, ...), welcher die Bereiche mit geringerer Beanspruchung abbildet.

Der Tragbock 10 kann als Tragbock in einem lenkergeführten Doppelachsaggregat für ein Nutzfahrzeug verwendet werden. Das Doppelachsaggregat ist an zwei Rahmenlängsträgern des Nutzfahrzeugs angeordnet und weist zumindest an Längslenkern und an Dreiecklenkern geführte Achsen auf, wobei die vertikale Abstützung der Achsen über Blattfedern erfolgt, welche mit an Tragböcken angegossenen Federtragzapfen verbunden sind. Lediglich beispielhaft kann dies ein Doppelachsaggregat sein, wie es in den Figuren 3 und 4 dargestellt ist.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 10: Tragbock
- 12: Längslenkerverbindungsstelle
- 14: Federtragzapfen
- 15: Montagebohrung
- 16: Rahmenlängsträgerverbindungsstelle
- 17: Verbindungsflansch
- 18: Grundkörper
- 19: Äußerer Endbereich
- 20: Äußere Begrenzungsfläche aus erstem Werkstoff
- 21: Innerhalb und mittig des Grundkörpers verlaufender Bereich aus erstem Werkstoff
- 22: Oberer Endbereich des Grundkörpers aus erstem Werkstoff
- 23-27: Verbindungsbereich aus erstem Werkstoff
- 28: Anbindungsbereich aus erstem Werkstoff
- 29: Bereich aus zweitem Werkstoff
- 30: Lenkergeführtes Doppelachsaggregat
- 31: Rahmenlängsträger
- 32: Achszentralgelenk
- 33: Dreieckslenker
- 34: Längslenker
- 35: Blattfedern
- 36: Befestigungsstelle des Querträgers
- 37: Querträger
- 38: Verstärkungselement
- 39: Verbindungsflansch
- 40: Tragbock

## Patentansprüche

1. Tragbock (10) für ein lenkergeführtes Doppelachsaggregat eines Nutzfahrzeugs, aufweisend
- einen Grundkörper (18),
- einen Federtragzapfen (14) zur Lagerung einer Blattfeder des Doppelachsaggregats;
- eine Längslenkerverbindungsstelle (12) zur Anbindung eines Längslenkers;
- eine Rahmenlängsträgerverbindungsstelle (16) zur Befestigung des Tragbocks an einem Rahmenlängsträger des Nutzfahrzeugs,
**dadurch gekennzeichnet, dass**
der Tragbock (10) als Verbundgussteil ausgeführt ist.

2. Tragbock (10) nach Anspruch 1, wobei der Tragbock mindestens einen aus einem ersten Werkstoff gefertigten, insbesondere gegossenen oder mittels 3D-Druck gedruckten, ersten Abschnitt (20-28) und mindestens einen aus einem zweiten Werkstoff gegossenen zweiten Abschnitt (29) aufweist, wobei der erste Werkstoff im Vergleich zu dem zweiten Werkstoff eine höhere Schwingfestigkeit und/oder Dichte aufweist.

3. Tragbock nach Anspruch 2,
a) wobei der mindestens eine erste Abschnitt einen Hauptlastpfad (20-28) des Tragbocks (25) und der mindestens eine zweite Abschnitt einen Nebenlastpfad des Tragbocks (10) bilden; und/oder
b) wobei ein Bereich des Tragbocks, der im Einsatz des Tragbocks einer hohen Beanspruchung ausgesetzt ist, als ein erster Abschnitt ausgeführt ist und ein Bereich des Tragbocks, der im Einsatz des Tragbocks einer im Vergleich hierzu geringeren mechanischer Beanspruchung ausgesetzt ist, als ein zweiter Abschnitt ausgeführt ist.

4. Tragbock nach Anspruch 2 oder 3, wobei der mindestens eine erste Abschnitt
a) zwei äußere Begrenzungsflächen (20) des Grundkörpers (18) umfasst, die sich jeweils zwischen der Längslenkerverbindungsstelle (12) und einem äußeren Endbereich (19) der Rahmenlängsträgerverbindungsstelle (16) erstrecken; und/oder
b) einen innerhalb des Grundkörpers verlaufenden Bereich (21) umfasst, der sich, vorzugsweise geradlinig, insbesondere an einem Lastpfad orientierend, zwischen der Längslenkerverbindungsstelle (12) und dem Federtragzapfen (14) erstreckt.

5. Tragbock nach einem der Ansprüche 2 bis 4, wobei der mindestens eine erste Abschnitt mehrere Verbindungsbereiche (23-27) umfasst, die sich in Querschnittsansicht ausgehend von einem Anbindungsbereich (28) des Federtragzapfens (14) strahlenartig, fächerartig und/oder radial hin zu der Rahmenlängsträgerverbindungsstelle (16) erstrecken, und wobei der mindestens eine zweite Abschnitt Bereiche (29) umfasst, die zwischen zwei benachbarten Verbindungsbereichen angeordnet sind.

6. Tragbock (10) nach einem der Ansprüche 2 bis 5, wobei der mindestens eine erste Abschnitt einen an die Rahmenlängsträgerverbindungstelle (16) angrenzenden Endbereich (22) des Grundkörpers (18) umfasst.

7. Tragbock (10) nach einem der vorhergehenden Ansprüche 2 bis 6, wobei der zweite Werkstoff aus einem Leichtmetallguss, wie Aluminiumguss, Magnesiumguss oder ähnlich, hergestellt ist und/oder wobei der erste Werkstoff Stahl ist.

8. Tragbock nach einem der vorhergehenden Ansprüche 2 bis 7, wobei eine Verbindung zwischen einem ersten Abschnitt und einem zweiten Abschnitt durch einen Formschluss im Übergangsbereich zwischen dem ersten und dem zweiten Abschnitt hergestellt ist.

9. Tragbock (10) nach Anspruch 8, wobei der Formschluss durch eine Lochstruktur, ein Lochbild und/oder einen Hinterschnitt gebildet ist.

10. Tragbock (10) nach einem der vorhergehenden Ansprüche, wobei eine Verbindung zwischen einem ersten Abschnitt und einem zweiten Abschnitt durch einen durch Aufschrumpfen hergestellten Kraftschluss hergestellt ist.

11. Tragbock (10) nach einem der vorhergehenden Ansprüche, ferner umfassend ein Versteifungselement, vorzugsweise ausgeführt als ein Rippen-, Mäander und/oder Kastenprofil, das an zumindest einem der ersten Abschnitte angeordnet ist.

12. Tragbock (10) nach Anspruch 11, wobei ein Versteifungselement vorgesehen ist, das sich zwischen Federtragzapfen und Rahmenlängsträgerverbindungsstelle erstreckt.

13. Tragbock (10) nach einem der vorhergehenden Ansprüche, wobei die Rahmenlängsträgerverbindungsstelle einen sich über die gesamte Länge erstreckenden Befestigungsflansch oder zwei seitlich angegossene Befestigungsflansche aufweist.

14. Lenkergeführtes Doppelachsaggregat für ein Nutzfahrzeug, welches an zwei Rahmenlängsträgern des Nutzfahrzeugs angeordnet ist und zumindest an Längslenkern und an Dreiecklenkern geführte Achse aufweist, wobei die vertikale Abstützung der Achse über Blattfedern erfolgt, welche mit an Tragböcken angegossenen Federtragzapfen verbunden sind, wobei die Tragböcke gemäß einem Tragbock (10) der Ansprüche 1 bis 13 ausgeführt sind.

15. Nutzfahrzeug, insbesondere Lastkraftwagen, aufweisend einen Tragbock (10) nach einem der Ansprüche 1 bis 13 und/oder ein Doppelachsaggregat nach Anspruch 14.

## Claims

1. Support block (10) for a link-controlled double axle assembly of a utility vehicle, having
- a main body (18),
- a spring support journal (14) for the mounting of a leaf spring of the double axle assembly;
- a longitudinal link connecting point (12) for the attachment of a longitudinal link;
- a frame longitudinal member connecting point (16) for the fastening of the support block to a frame longitudinal member of the utility vehicle,
**characterized in that**
the support block (10) is formed as a composite cast part.

2. Support block (10) according to Claim 1, wherein the support block has at least one first portion (20-28), which is manufactured from a first material and which is in particular cast or printed by means of 3D printing, and at least one second portion (29), which is cast from a second material, wherein the first material has a higher vibration resistance and/or density than the second material.

3. Support block according to Claim 2,
a) wherein the at least one first portion forms a main load path (20-28) of the support block (25) and at least one second portion forms a secondary load path of the support block (10); and/or
b) wherein a region of the support block which is subject to high loading during the use of the support block is designed as a first portion and a region of the support block which is subjected to relatively low mechanical loading in relation thereto during the use of the support block is designed as a second portion.

4. Support block according to Claim 2 or 3, wherein the at least one first portion
a) comprises two outer delimiting surfaces (20) of the main body (18) which extend in each case between the longitudinal link connecting point (12) and an outer end region (19) of the frame longitudinal member connecting point (16); and/or
b) a region (21) which runs within the main body and which extends, preferably rectilinearly, in particular in a manner aligned with a load path, between the longitudinal link connecting point (12) and the spring support journal (14).

5. Support block according to any of Claims 2 to 4, wherein the at least one first portion comprises multiple connecting regions (23-27) which, in a cross-sectional view, extend in a radiating manner, in a fan-like manner and/or radially toward the frame longitudinal member connecting point (16), and wherein the at least one second portion comprises regions (29) which are arranged between two adjacent connecting regions.

6. Support block (10) according to any of Claims 2 to 5, wherein the at least one first portion comprises an end region (22), adjoining the frame longitudinal member connecting point (16), of the main body (18).

7. Support block (10) according to any of the preceding Claims 2 to 6, wherein the second material is produced from a cast light metal, such as cast aluminium, cast magnesium or the like, and/or wherein the first material is steel.

8. Support block according to any of the preceding Claims 2 to 7, wherein a connection between a first portion and a second portion is produced by positive locking in the transition region between the first and the second portion.

9. Support block (10) according to Claim 8, wherein the positive locking is formed by a perforation structure, a perforation pattern and/or an undercut.

10. Support block (10) according to any of the preceding claims, wherein a connection between a first portion and a second portion is produced by non-positive locking produced by shrink-fitting.

11. Support block (10) according to any of the preceding claims, furthermore comprising a stiffening element, designed preferably as a rib profile, meandering profile and/or box profile, which is arranged on at least one of the first portions.

12. Support block (10) according to Claim 11, wherein a stiffening element is provided which extends between spring support journal and frame longitudinal member connecting point.

13. Support block (10) according to any of the preceding claims, wherein the frame longitudinal member connecting point has a fastening flange which extends over the entire length, or has two laterally integrally cast fastening flanges.

14. Link-controlled double axle assembly for a utility vehicle, which is arranged on two frame longitudinal members of the utility vehicle and which has an axle guided at least on longitudinal links and wishbones, wherein the vertical support of the axle is realized by means of leaf springs which are connected to spring support journals integrally cast on support blocks, wherein the support blocks are designed in accordance with a support block (10) of Claims 1 to 13.

15. Utility vehicle, in particular heavy goods vehicle, having a support block (10) according to any of Claims 1 to 13 and/or a double axle assembly according to Claim 14.

## Revendications

1. Console (10) destinée à une unité à deux essieux guidée par bras d'un véhicule utilitaire, ladite console comprenant
- un corps de base (18),
- une broche de support de ressort (14) destinée au montage d'un ressort à lame de l'unité à deux essieux ;
- un point de liaison de bras longitudinal (12) destiné à la liaison d'un bras longitudinal ;
- un point de liaison de longeron de châssis (16) destiné à fixer la console à un longeron de châssis du véhicule utilitaire,
**caractérisé en ce que**
la console (10) est conçue comme une pièce moulée composite.

2. Console (10) selon la revendication 1, la console comportant au moins une première portion (20-28) fabriquée à partir d'une première matière, notamment coulée ou imprimée au moyen d'une impression 3D, et au moins une deuxième portion (29) coulée à partir d'une deuxième matière, la première matière ayant une résistance aux vibrations et/ou une densité supérieures à celles de la deuxième matière.

3. Console selon la revendication 2,
a) l'au moins une première portion formant un chemin de charge principal (20-28) de la console (25) et l'au moins une deuxième portion formant un chemin de charge secondaire de la console (10) ; et/ou
b) une région de la console, qui est soumise à une contrainte élevée lors de l'utilisation de la console, étant conçue comme première portion et une région de la console, qui est soumise à une contrainte mécanique relativement plus faible, étant conçue comme deuxième portion.

4. Console selon la revendication 2 ou 3, l'au moins une première portion
a) comprenant deux surfaces limites extérieures (20) du corps de base (18), qui s'étendent chacune entre le point de liaison de bras longitudinal (12) et une région d'extrémité extérieure (19) du point de liaison de longeron de châssis (16) ; et/ou
b) comprenant une région (21) qui s'étend à l'intérieur du corps de base et qui s'étend, de préférence en ligne droite, notamment en étant orientée sur un chemin de charge, entre le point de liaison de bras longitudinal (12) et la broche de support de ressort (14).

5. Console selon l'une des revendications 2 à 4, l'au moins une première portion comprenant une pluralité de régions de liaison (23-27) qui s'étendent, dans une vue en coupe transversale, depuis une région de liaison (28) de la broche de support de ressort (14) de manière rayonnante, en éventail et/ou radialement en direction du point de liaison de longeron de châssis (16), et l'au moins une deuxième portion comprenant des régions (29) qui sont disposées entre deux régions de liaison adjacentes.

6. Console (10) selon l'une des revendications 2 à 5, l'au moins une première portion comprenant une région d'extrémité (22) du corps de base (18) qui est adjacente au point de liaison de longeron de châssis (16) .

7. Console (10) selon l'une des revendications précédentes 2 à 6, la deuxième matière étant obtenue à partir d'une fonte métallique légère, telle que la fonte d'aluminium, la fonte de magnésium ou analogue, et/ou la première matière étant de l'acier.

8. Console selon l'une des revendications précédentes 2 à 7, une liaison entre une première portion et une deuxième portion étant une liaison par complémentarité de formes réalisée dans la région de transition entre les première et deuxième portions.

9. Console (10) selon la revendication 8, la liaison par complémentarité de formes étant formée par une structure perforée, un gabarit de trous et/ou une contre-dépouille.

10. Console (10) selon l'une des revendications précédentes, une liaison entre une première portion et une deuxième portion étant une liaison en force réalisée par rétrécissement.

11. Console (10) selon l'une des revendications précédentes, comprenant en outre un élément de rigidification, de préférence réalisé sous la forme d'un profilé en nervure, en méandre et/ou en caisson qui est disposé sur au moins une des premières portions.

12. Console (10) selon la revendication 11, un élément de rigidification étant prévu qui s'étend entre la broche de support de ressort et le point de liaison de longeron de châssis.

13. Console (10) selon l'une des revendications précédentes, le point de liaison de longeron de châssis comportant une bride de fixation s'étendant sur toute la longueur ou deux brides de fixation coulées latéralement.

14. Unité à deux essieux guidée par bras destinée à un véhicule utilitaire, laquelle unité est disposée sur deux longerons de châssis du véhicule utilitaire et comporte au moins un essieu guidé sur des bras longitudinaux et des bras triangulaires, le support vertical de l'essieu étant assuré par des ressorts à lames qui sont reliés à des broches de support de ressort coulées sur des consoles, les consoles étant réalisées sous la forme d'une console (10) des revendications 1 à 13.

15. Véhicule utilitaire, notamment camion, comprenant une console (10) selon l'une des revendications 1 à 13 et/ou une unité à deux essieux selon la revendication 14.
